# EUROPEAN PATENT APPLICATION

(11) **EP 1 267 183 A2**
(43) Date of publication of application: **18.12.2002**
(21) Application number: 02254061.1
(22) Date of filing: 11.06.2002
(51) Int. Cl.: G02B 6/13, G02B 6/122, G02F 1/00

(54) **A method for producing optical waveguides, optical waveguides and frequency converting devices**

(30) Priority: 13.06.2001 JP 2001178521
(71) Applicant: NGK INSULATORS, LTD., Nagoya City Aichi Pref. (JP)
(72) Inventor: KATO, Kenji c/o NGK Insulators, Ltd., Mizuho-ku Nagoya-shi Aichi-ken 467-8530 (JP); KONDO, Yoshimasa c/o NGK Insulators, Ltd., Mizuho-ku Nagoya-shi Aichi-ken 467-8530 (JP); Yoshino, Takashi c/o NGK Insulators, Ltd., Mizuho-ku Nagoya-shi Aichi-ken 467-8530 (JP)
(74) Representative: Paget, Hugh Charles Edward

(57) **Abstract**

The invention provides a novel method for producing an optical waveguide by irradiating laser beam onto an oxide single crystal material (3). The object of the invention is to reduce the curvature, surface roughness and microcracks in a laser working face of the material, thus reducing the propagating loss of light propagating through the optical waveguide. The method comprises the step of irradiating laser beam pulses (15A,15B) on an oxide single crystal material so that the material is worked to form an optical waveguide (9A). Each of the pulses has a half value width of not longer than 10nsec. The grooves (6A) and (6B) may preferably be elongated in parallel with each other so that a ridge shaped structure (10A) is formed between and defined by the groove (6A) and (6B). (6a) is the bottom surface and (6b) is the side wall surface of the groove, both surfaces being laser working faces. The layer (3) of a higher refractive index is subjected to laser irridiation working to form a three-dimensional optical waveguide portion (9A) in the ridge-shaped structure (10A).

## Description

This application claims the benefit of Japanese Patent Application P2001-178, 521, filed on June 13, 2001, the entirety of which is incorporated by reference.

### BACKGROUND OF THE INVENTION

### 1. Field of the Invention

The invention relates to a process for producing an optical waveguide, which may be preferably used as a device for generating second harmonic wave of quasi-phase matched system and optical modulator.

### 2. Related Art Statement

Recently, it has been studied to develop a device for light modulation by forming an optical waveguide in various kinds of materials. Such devices are used in systems for optical communication. The so-called ridge-shaped optical waveguides have been expected as optical modulators, optical switching devices or the like. It is proposed a Quasi-phase matched (QPM) type second harmonic generation (SHG) device using an optical waveguide made of a lithium niobate or lithium tantalate single crystal, in which a periodically reversed polarization structure is formed. Such SHG device has been expected as a light source for generating blue laser to be used for light pickups. The second harmonic generation device finds a wide range of applications such as optical disc memorization, medical uses, optochemical uses, various optical measurements, etc.

The assignee disclosed a process of producing a ridge-shaped optical waveguide used for a device for generating second harmonic wave, in Japanese Patent laid-Open publication (Kokai) A269, 430/1997. The waveguide is formed by subjecting an oxide single crystal to abrasion working using an excimer laser. Such oxide single crystal includes lithium niobate and a lithium niobate-lithium tantalate solid solution.

### SUMMARY OF THE INVENTION

The inventors have further studied the above process and found the following problems. That is, they irradiated laser beam pulses onto an oxide single crystal by means of a system for generating an excimer laser to form a pair of grooves. A ridge shaped optical waveguide is thus formed between and defined by the grooves. In this case, it is desired to form the groove having a cross sectional shape similar to a rectangle. Additionally, it is necessary to form a groove having a smooth inner wall surface and to prevent the formation of cracks. It has been found that such working with a laser beam has, however, difficult problems as follows.

That is, each groove tends to have a curved inner wall surface in a cross section. In other words, it is difficult to form a groove with a flat inner wall surface and corner portions of a substantially right angle in a cross section. Moreover, microcracks as well as surface roughness may be introduced in the inner wall surface and corner portions. When the inner wall surface has a curved profile in a cross section or surface roughness or microcracks are introduced, the cross sectional shape of light beam propagating through such optical waveguide may become substantially different or deviated from a circle. Such deformation of the cross sectional shape of the light beam may result in an increase of an insertion loss or induce the scattering of light from the surface of the optical waveguide, contributing to the propagating loss of light through the optical waveguide.

It is an object of the invention is to provide a method for producing an optical waveguide by irradiating laser beam onto an oxide single crystal material so that the curvature, surface roughness and microcracks in a laser worked face of the material may be reduced, thus reducing the propagating loss of light propagating through the optical waveguide.

The invention provides a method for producing an optical waveguide, the method comprising the step of:
irradiating laser beam pulses on an oxide single crystal material so that the material is worked to form an optical waveguide, wherein each of the pulses has a half value width of not longer than 10 nsec.

The inventors have researched the above problems associated with the formation of an optical waveguide by means of a laser working process and found the followings. For example, lithium niobate, a representative example of oxide single crystals for an optical use, has an absorption edge of about 400 nm. On the other hand, a practical commercial system for generating an excimer laser has an oscillation wavelength of, for example, about 250 nm. It is known a system for oscillating a laser having a substantially shorter wavelength. Such system, however, generally has a small output power and is not suitable for mass production.

As described above, a practical laser system suited for mass production now available oscillates a laser having a wavelength slightly longer than or relatively near the absorption edge of an oxide single crystal to be worked by the laser. Thermal contribution provided by multiple photon absorption mechanism is thus substantial for working the oxide single crystal by laser irradiation. When laser beam is irradiated onto an oxide single crystal to form a groove, it is considered that the excessive thermal contribution may result in fracture and many microcracks in the surface region of the working surface of the crystal. Surface roughness may also be introduced on the inner wall surface of the groove as well as the precision of the shape of the worked surface may be degraded. In particular, when the oxide single crystal material has a piezoelectricity, the surface roughness of the worked surface may be further increased due to the contribution of the piezoelectricity.

The inventors have studied for providing a solution for the above problems, and finally found that it is effective to reduce the pulse width of laser beam pulse to a value not longer than 10 nsec. The solution is based on the following findings. That is, when the laser beam has a pulse width of nanoseconds order, the thermal contribution is momentary during the working process of the oxide single crystal by irradiating laser beam on it. Even such momentary or extremely short-term thermal contribution of nano seconds order may result in a surface roughness on the worked surface sufficient for inducing a propagating loss of light propagating through the optical wave guide.

Particularly preferably, the pulse width of the laser beam for working is not longer than 5 nsec. Although the lower limit of the pulse width of the laser beam is not particularly limited, it may preferably be not shorter than 0.1 nsec for improving the productivity of the working step of the material.

The effects, features and advantages of the invention will be appreciated upon reading the following description of the invention when taken in conjunction with the attached drawings, with the understanding that some modifications, variations and changes of the same could be made by the skilled person in the art.

### BRIEF DESCRIPTION OF THE DRAWINGS

Fig. 1 is a cross sectional view schematically showing a work 11 before laser working.
Fig. 2 is a cross sectional view schematically showing an optical waveguide device 5A formed by laser working.
Fig. 3 is a cross sectional view schematically showing an optical waveguide device 5B formed by laser working.
Fig. 4 is a cross sectional view schematically showing an optical waveguide device 5C formed by laser working.
Fig. 5 is a perspective view schematically showing a work 11 with the surface subjected to laser working.
Fig. 6 is a photograph showing a cross sectional shape of grooves and a ridge structure formed in the example 1 of according to the invention.
Fig. 7 is a photograph showing a cross sectional shape of grooves and a ridge structure formed in the example 2 of according to the invention.
Fig. 8 is a photograph showing a cross sectional shape of grooves and a ridge structure formed in a comparative example.

### Preferred embodiments of the invention

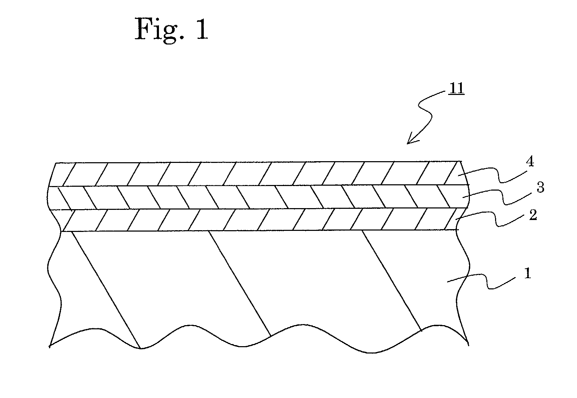

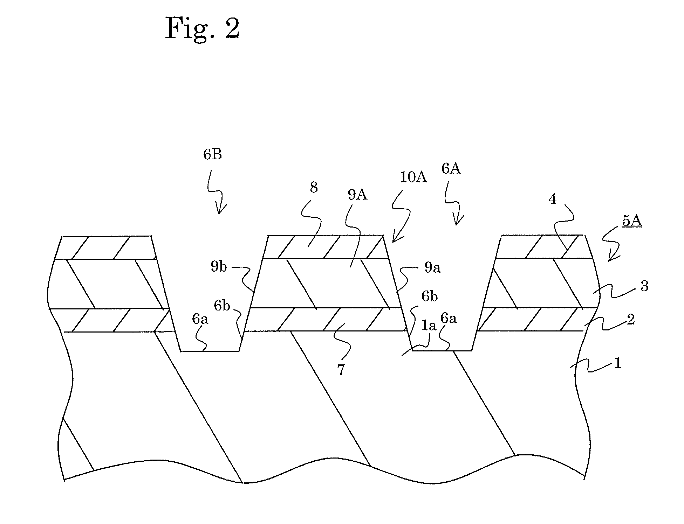

The invention will be further described below in detail referring to the attached drawings. Fig. 1 is a cross sectional view schematically showing a work 11 before laser working, and Fig. 2 is a cross sectional view schematically showing an optical waveguide device 5A formed by laser working.

As shown in Fig. 1, a work 11 in this example has a substrate 1, an under clad layer 2, an oxide single crystal material (a layer of a higher refractive index) 3 and an over clad layer 4. At least the layer 3 is made of an oxide single crystal. The refractive index of the layer 3 is sufficiently higher than those of the over clad layer 3 and under clad layer 2 so that light may be transmitted within the layer 3 of a higher refractive index. It is thus possible to form a three dimensional optical waveguide by working the material 3 by means of laser irradiation.

Laser beam is irradiated onto the surface of the substrate 11 to form grooves 6A and 6B having the shapes shown in Fig. 2. The grooves 6A and 6B may preferably be elongated in parallel with each other so that a ridge shaped structure 10A is formed between and defined by the grooves 6A and 6B. 6a is the bottom surface and 6b is the side wall surface of the groove, both surfaces being laser working faces. The layer 3 of a higher refractive index is subjected to laser irradiation working to form a three-dimensional optical waveguide portion 9A in the ridge-shaped structure 10A. 9a and 9b are the surfaces formed by the laser working. The optical waveguide portion 9A is sandwiched by the over clad layer 8 and under clad layer 7.

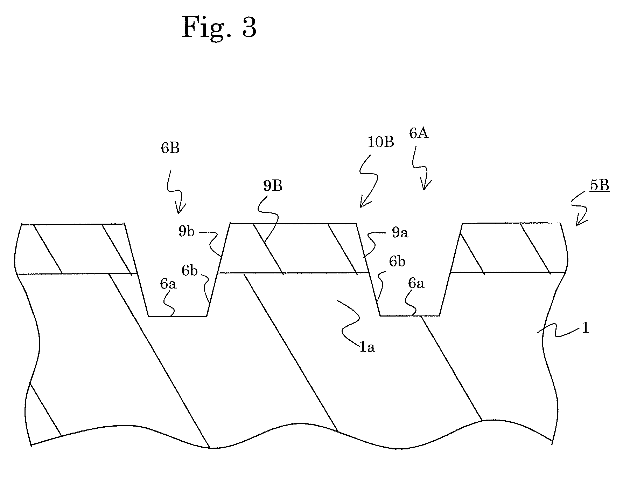

In the invention, the shape and pattern of an optical waveguide are not particularly limited. For example, an optical waveguide device 5B shown in Fig.3 has a ridge-shaped structure 10B. The structure 10B has a ridge portion 1a of a substrate 1 and a three-dimensional optical waveguide 9B formed on the ridge portion 1a.

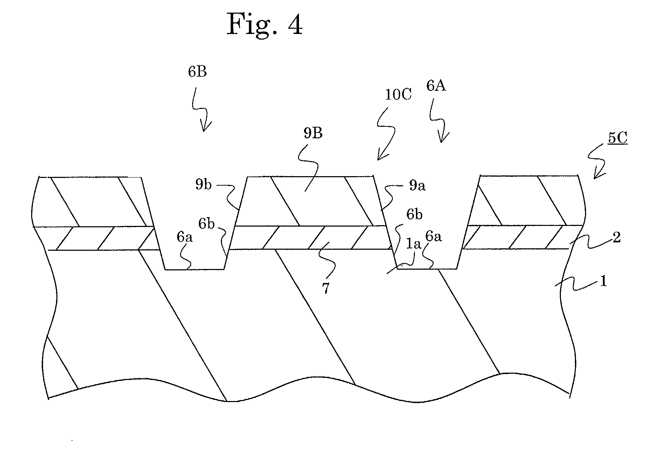

An optical waveguide device 5C shown in Fig. 4 has a ridge-shaped structure 10C. The structure 10C has a ridge portion 1a of a substrate 1, an under clad layer 7 formed on the ridge portion 1a, and a three dimensional optical waveguide 9B formed on the under clad layer 7.

In the invention, an optical waveguide is made of an oxide single crystal. Parts other than the optical waveguide (for example, under clad layer, over clad layer and substrate) of an optical waveguide device may be made of an oxide single crystal or another material. Such another material includes a ceramic material and optical resin.

In the invention, at least an oxide single crystal material is subjected to laser working to form an optical waveguide. A work on which laser beam is directly irradiated may be composed of the oxide single crystal material only, or may comprise another part or parts, such as an over clad layer, under clad layer, and/or a separate substrate. Particularly when the work comprises an over clad layer, the over lad layer may be preferably made of an oxide single crystal.

An optical waveguide may preferably be and, is not particularly limited to, a three-dimensional optical waveguide, and may be a slab optical waveguide.

In a preferred embodiment, the oxide single crystal constituting an optical waveguide is a piezoelectric single crystal.

In a preferred embodiment, the oxide single crystal constituting an optical waveguide is a complex oxide of a plurality of metal elements. In a particularly preferred embodiment, the oxide single crystal is a complex oxide of lithium and another metal element.

Particularly preferably, the metal element other than lithium is one or more element selected from the group consisting of niobium, tantalum and potassium. Such oxide single crystal includes lithium niobate, lithium tantalate, a lithium niobate-lithium tantalate solid solution, potassium lithium niobate, potassium lithium tantalate and a potassium lithium niobate-potassium lithium tantalate solid solution. Each of the materials may contain a metal element other than lithium, potassium, niobium and tantalum as a dopant, as long as the dopant does not substantially change the crystalline structure of the oxide single crystal.

When a work has an over clad layer, such over clad layer may be made of a single crystal, which may preferably be a complex oxide of lithium and a metal element other than lithium. In this case, the metal element other than lithium may preferably be a metal element selected from the group consisting of niobium, tantalum and potassium. Such oxide single crystal includes lithium niobate, lithium tantalate, a solid solution of lithium niobate-lithium tantalate, potassium lithium niobate, potassium lithium tantalate, and a solid solution of potassium lithium niobate-potassium lithium tantalate.

Each of the oxide single crystals described above may contain a dopant of one or more rare earth element. The doped rare earth element may function as an additive for laser oscillation. The doped rare earth element may preferably be Nd, Er, Tm, Ho, Dy or Pr.

It may be added into the oxide single crystal, as a dopant, one or more metal element selected from the group consisting of magnesium, zinc, titanium, vanadium, iron, scandium and indium. These elements may be effective for improving the resistance against optical damage.

The range of wavelength suited for the laser working may be varied depending on the wavelength of absorption edge of an oxide single crystal to be worked and thus may not be determined in general. Most of oxide single crystals used for an application of an optical waveguide have the absorption edges at wavelengths not longer than 350 nm. It is therefore practically impossible to work an oxide single crystal with a good precision , for example, by means of argon laser having a wavelength of 512 nm. The reasons are as follows. The wavelength of 512 nm is longer that of the absorption edge of the single crystal to be worked, so that the laser beam may be propagated toward inside of the crystal. In other words, the absorption of the laser beam in the surface region of the crystal is substantially small, indicating the difficulty of ablation working.

The wavelength of light for laser working may preferably be not longer than 350 nm and more preferably be not longer than 300 nm. On a practical point of view, the wavelength may preferably be not shorter than 150 nm.

For example, an oxide single crystal may preferably be worked by using an excimer laser, an excimer lamp, or the fourth harmonic wave of YAG laser (for example, the fourth harmonic wave of Nd-YAG laser).

An excimer laser is a pulse repetition oscillation laser outputting ultraviolet rays. In the laser oscillation system, a gaseous compound such as ArF (wavelength of 193 nm), KrF (wavelength of 248 nm) and XeCl (wavelength of 308 nm) oscillates ultraviolet ray pulses. The pulses are then arrayed by means of an optical resonator and output in the arrayed state.

Applications of an excimer laser are described in a literature such as "Excimer laser now in a practically applicable stage" in "O plus E" No. 11, pp 64 to 108, November 1995.

A system for irradiating laser beam for laser working includes systems of so-called simultaneous exposure and multiple reflection methods.

In the invention, for example the following three methods may be listed for forming a ridge-shaped optical waveguide by irradiating laser beam.
(1) Spot scanning working
(2) Simultaneous transfer working
(3) Slit scanning working

The optical waveguide device according to the invention may be used for fabricating an optical modulator for modulating the intensity or phase of light and optical switching device. In this case, the shape or pattern of the electrode for modulating light is not particularly limited. Moreover, it is possible to provide a frequency converting device by forming a periodically reversed polarization structure in the optical waveguide of the inventive optical waveguide device.

### EXAMPLES

A device 5A shown in Fig. 2 was produced according to the process explained referring to Figs. 1 and 2. A three-inch wafer of a thickness of 0.5 mm and made of an X⁻cut LiNbO₃ single crystal was prepared. An under clad layer 2 made of the single crystal of a lithium niobate-lithium tantalate solid solution was formed on the wafer by means of liquid phase epitaxial process. An optical waveguide layer 3 made of lithium niobate single crystal was then formed on the under clad layer 2. An over clad layer 4 made of the single crystal of a lithium niobate-lithium tantalate solid solution was then formed on the optical waveguide layer 3 by means of liquid phase epitaxial process.

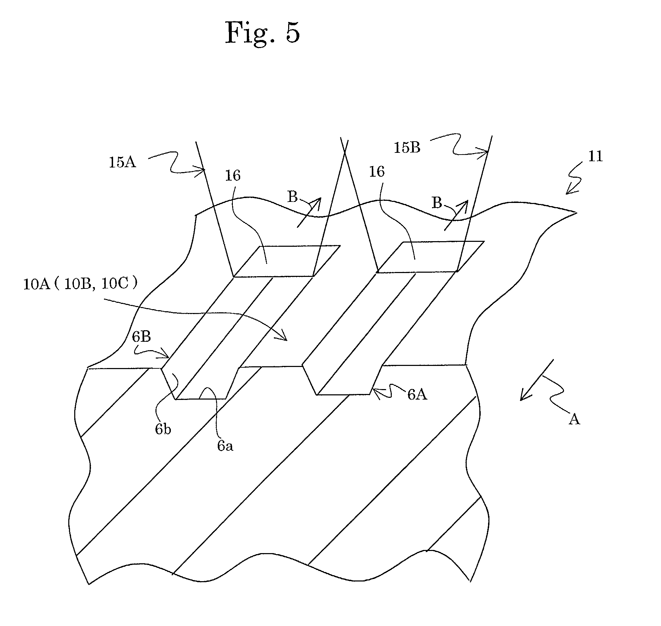

Excimer laser (of a wavelength of 248 nm using KrF) was irradiated onto the wafer using spot scanning working as shown in Fig. 5 to form grooves 6A and 6B. That is, a work 11 was mounted on a movable stage not shown. Laser beams 15A and 15B were thus irradiated onto the surface of the work 11, while moving the stage as an arrow "A". The work 11 was scanned by the laser beams 15A and 15B as arrows "B".

During the laser working, the power of the laser ray on the surface of the wafer was set at 1 J/cm², the scanning speed of the laser beam 100 µm/s, and the pulse repetition frequency 50 Hz. Each of the working regions (regions irradiated by the laser beams) 16 had dimensions of 10 µm × 10 µm. The grooves 6A and 6B each having a depth of 5 µm and a width of 10 to 20 µm were formed by this working process.

The half value width of the laser pulse was 2.5 nsec in the inventive example 1, 5 nsec in the inventive example 2, and 16 nsec in the comparative example.

A single-mode optical fiber was connected to the end face of each of the ridge-shaped optical waveguides 9A. Laser ray of TE mode was then irradiated from the optical fiber to the optical waveguide 9A to evaluate the waveguide property. The results will be described below.

### (Inventive example 1)

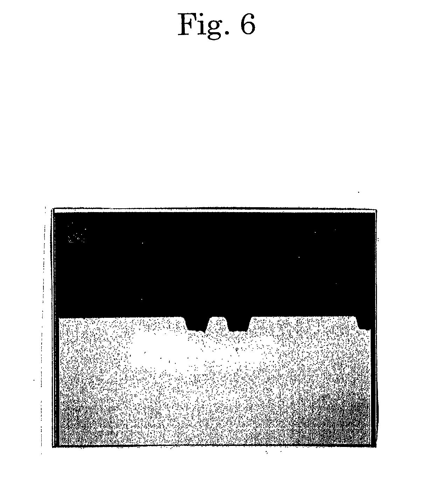

When it was applied laser beam having a half value width of 2.5 nsec, grooves and ridge-shaped structure having cross sectional shapes shown in a photograph of Fig. 6 were obtained. Each groove substantially has a shape of a trapezoid. The propagating loss in the optical waveguide was 0.5 dB/cm.

### (Inventive example 2)

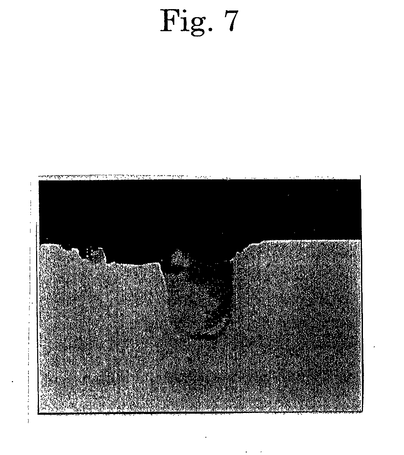

When it was applied laser beam having a half value width of 5 nsec, grooves each having a cross sectional shape shown in a photograph of Fig. 7 were obtained. The shape of each groove was substantially rectangular, with its corners curved. The surface roughness of the inner wall surface of the groove was relatively small. The propagating loss in the optical waveguide was 0.8 dB/cm.

### (Comparative example)

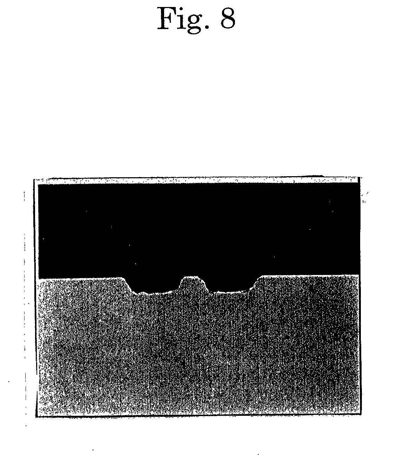

When it was applied laser beam having a half value width of 16 nsec, grooves each having a cross sectional shape shown in a photograph of Fig. 8 were obtained. Although the designed shape of each groove was a trapezoid in a cross section, substantial irregularities were found in the shape of the groove actucally produced. The surface roughness of the inner wall surface of each groove was large, with a substantial amount of chippings observed. The propagating loss in the optical waveguide was 25 dB/cm.

As described above, according to the invention, it is possible to produce an optical waveguide by irradiating laser beam onto an oxide single crystal material, and to reduce the curvature, surface roughness and microcracks on the laser worked surface. The propagating loss of light propagating through the optical waveguide may thus be reduced.

The present invention has been explained referring to the preferred embodiments. The invention is, however, not limited to the illustrated embodiments which are given by way of examples only, and may be carried out in various modes without departing from the scope of the invention.

## Claims

1. A method for producing an optical waveguide, the method comprising the step of:
irradiating laser beam pulses on an oxide single crystal material so that said material is worked to form an optical waveguide,
wherein each of said pulses has a half value width of not longer than 10 nsec.

2. The method of claim 1, wherein said laser beam is an excimer laser beam.

3. The method of claim 1 or 2, wherein said laser beam pulses are irradiated on said material to form at least a pair of grooves so that said optical waveguide is formed between and defined by said grooves.

4. The method of each of claims 1 to 3, wherein said oxide single crystal material is a complex oxide of a plurality of metal elements.

5. The method of claim 4, wherein said oxide single crystal material is a complex oxide of lithium and a metal element other than lithium.

6. The method of each of claims 1 to 5, wherein said oxide single crystal material is a piezoelectric single crystal.

7. An optical waveguide produced by the process of any one of claims 1 to 6.

8. A frequency converting device of quasi-phase-matched system, comprising:
said optical waveguide produced by the method of any one of claims 1 to 6; and
a periodically reversed polarization structure formed in said optical waveguide.
